# EUROPEAN PATENT APPLICATION

(11) **EP 3 225 816 A1**
(43) Date of publication of application: **04.10.2017**
(21) Application number: 17161809.3
(22) Date of filing: 20.03.2017
(51) Int. Cl.: F02C 7/143

(54) **SYNTHETIC MEDIA PADS FOR AN EVAPORATIVE COOLER AND METHOD FOR EVAPORATIVE COOLING**

(30) Priority: 28.03.2016 US 201615082825
(71) Applicant: General Electric Company, Schenectady, NY 12345 (US)
(72) Inventor: PONYAVIN, Valery Ivanovich, Greenville, SC South Carolina 29615 (US); ZHANG, Hua, Greenville, SC South Carolina 29615 (US); MERCHANT, Laxmikant, 560066 Bangalore (IN)
(74) Representative: Lee, Brenda

(57) **Abstract**

Synthetic media pads 38, 40, 50, 66, 96 configured to be arranged in a stack 28 of an evaporative cooler 20 for a gas turbine, wherein the synthetic media pads include high density synthetic media pads 40 and low density synthetic media pads 38. The front and rear of the pads may have surface patterns, such as grooves 44, 78 and ridges 42, 76, to provide support for the pads.

## Description

### BACKGROUND OF THE INVENTION

The invention relates to media pads in an evaporative cooler and specifically evaporative coolers in an inlet duct for an industrial gas turbine.

Industrial gas turbines ingest air, compress the air, mix it with fuel, burned the mixture and used the resulting combustion gases to drive a turbine which generates power. The power generated by a gas turbine is related, in part, to the water content and temperature of the air ingested by the turbine. The higher the water content and lower the temperature of the air, the greater the power output of gas turbine.

Evaporative coolers increase the water content and lower the temperature of the air ingested by a gas turbine. They are typically used while the ambient air dry bulb temperature is high, e.g., greater than 80 degrees Fahrenheit (25 degrees Celsius), and the relative humidity is low, e.g., below forty percent. Under conditions of high temperature and low humidity, evaporative coolers can increase the power output of a gas turbine by five percent, ten percent or more.

An evaporative cooler adds water to the inlet air flowing into a gas turbine. Water flows over pads of media that extend across an inlet air duct. Air flowing through the duct evaporates the water on the media. The evaporation cools the air and increases its humidity of the air. The cooled, humid air has a greater density than the hot, dry air. The higher density increases the mass flow rate of the air which increases in power output and efficiency of the gas turbine.

Conventional media pads are most commonly formed of paper. Recent efforts have been made to form media pads from synthetic materials. These efforts have not been entirely successful due to the inability to form a synthetic material having that does not create excessive pressure loses in the inlet while maintain appropriate cooling effectiveness.

### BRIEF DESCRIPTION OF THE INVENTION

An evaporative cooler has been conceived and is disclosed herein that is configured for a gas turbine or other device, the cooler includes a stack of synthetic media pads configured to be mounted in an inlet chamber having an inlet open to atmospheric air and an outlet coupled to an air inlet to the gas turbine or other device, wherein the synthetic media pads include high density synthetic media pads and low density synthetic media pads.

Synthetic media pads have been conceived are disclosed herein that are configured to be arranged in a stack to be mounted in an air inlet chamber having an inlet open to atmospheric air and an outlet coupled to an air inlet to the gas turbine, wherein the synthetic media pads include high density synthetic media pads and low density synthetic media pads.

A method has been conceived and is disclosed herein to form a stack of synthetic media pads for an evaporative cooler, the method includes: arranging in the stack high density synthetic media pads of synthetic fibers, wherein a density of fibers in the high density media pads is above a first threshold density; arranging in the stack low density synthetic media pads of synthetic fibers, wherein a density of fibers in the low density media pads is below a second threshold density which is lower than the first threshold density, and positioning the stack in the evaporative cooler such that a front surface of the stack faces air drawn into an inlet chamber and a rear surface faces an air passage leading to an inlet to a gas turbine.

### BRIEF DESCRIPTION OF THE DRAWINGS

FIG. 1 is a schematic diagram showing, in cross section, an air inlet duct for an industrial gas turbine, wherein the inlet duct includes an evaporative cooler.
FIG. 2 is a schematic diagram showing a perspective view of a stack of synthetic media pads for the evaporative cooler.
FIGS. 3 to 6 show various side surface shapes synthetic media pads.
FIG. 7 shows adjacent sides of two synthetic media pads.
FIG. 8 shows a side of a synthetic media pad jointed along front and rear edges to an adjacent synthetic media pad.
FIG. 9 shows the edges of two synthetic medial pads joint together.

### DETAILED DESCRIPTION OF THE INVENTION

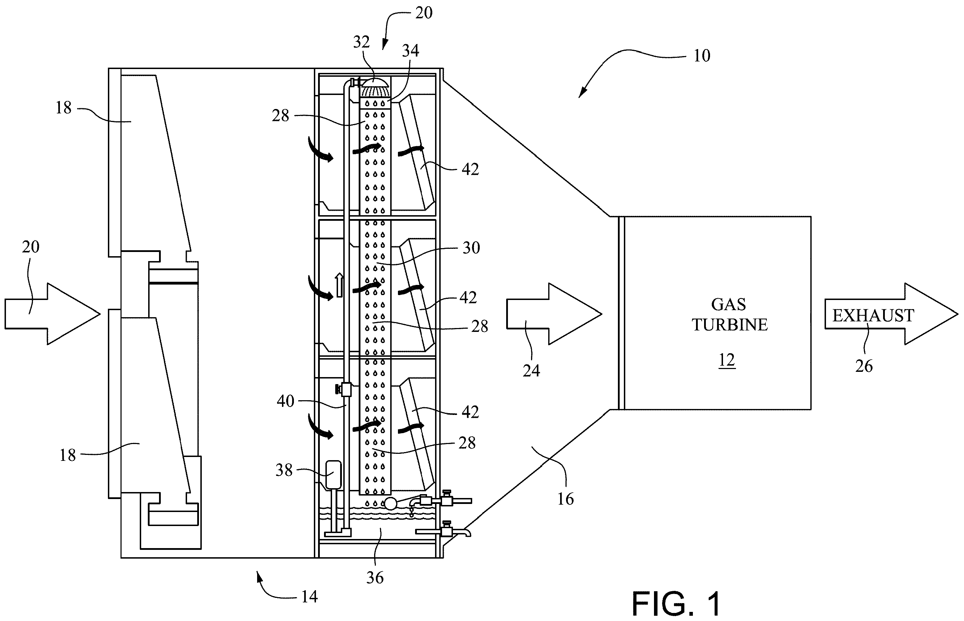

FIG. 1 shows an air inlet duct 10 for an industrial gas turbine 12. The inlet duct 10 includes an inlet chamber 14 and a passage 16 that directs a flow 18 of atmospheric air to the compressor of the gas turbine 12. The inlet chamber includes filters 18 at a front opening to the inlet chamber and an evaporative cooler 20.

The industrial gas turbine is shown as an exemplary device using the evaporative cooler. Other devices, such as air conditioning units, that need cool, moist air may benefit from the evaporative cooler disclosed herein.

Unfiltered atmospheric air 22 enters the inlet duct 10, is filtered and the filtered air passes through the evaporative cooler 20 as the air flows 24 to the gas turbine 12. The air is used as a working fluid by the gas turbine to generate power. Exhaust air 26 is discharged by the gas turbine.

The evaporative cooler includes one or more stacks 28 of evaporative media pads. The stack(s) are arranged as a wall 30 that spans an entire cross section of the airflow passage in the inlet chamber. The wall 30 may be formed of two, three or more stacks 24 end-to-end is a vertical array. The stacks 28 may each have similar heights, depths and widths.

A water nozzle(s) 32 and a water distribution pad 34 are at the upper edge of the top stack 28. A water tank 36 is below the bottom edge of the lower stack. A water pump 38 moves water from the tank 36, up through a water pipe 40 and to the water nozzle. Downstream of the airflow 24 may be demisting pads 42 that capture water droplets from the airflow before the flow enters the compressor of the gas turbine.

Water from the nozzle(s) 32 and distribution pad flows down over the outer surfaces of the media pads in each of the stacks 28 towards the drain. As the water flows over and through the media pads, the filtered atmospheric air flows through the stacks 30 of media pads. The air is cooled by the water in the media pads as some water evaporates into the air. The evaporation increases the density of the air which results in an increased mass of the airflow as compared to the atmospheric air entering the inlet chamber. Increasing the density and cooling the airflow increases the ability of the gas turbine to efficiently produce power.

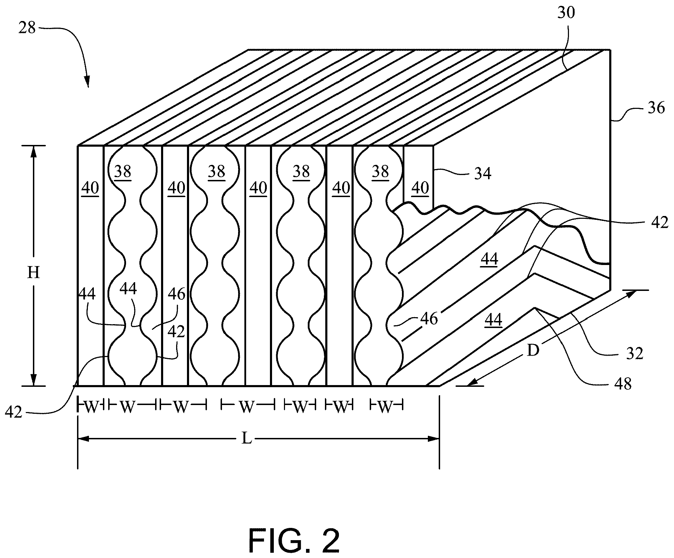

Figure 2 is a perspective view of an exemplary stack 28 of media pads. The medial pads are stacked such that a side surface of one pad abuts a side surface of an adjacent pad. The front, rear, top and bottom edges of the pads are aligned in the stack. An end pad is shown in figure 2 as having a corner cut away to illustrate the grooves on the side surface on one of the pads. In practice, a corner of a pad would not be removed.

The medial pads of the stack 28 are oriented vertically such the upper edges 30 of the pads face upward and the lower edges 32 face downward. The front edges 34 of the pads face the incoming airflow and the rear edges 36 of the pads face towards the rear of the inlet chamber and downstream of the air flow. Each pad may have the same height (H) and depth (D), which corresponds to the height and depth of the stack. The length (L) of the stack is formed by the stack 28 of pads arranged side by side. The height and length of the stack may correspond to a cross section of the airflow passage through the inlet chamber.

By way of example, each synthetic media pad may have a depth (D) of 12 to 18 inches (0.3 meter to 0.5m), and a height (H) and width (W) each of six to 30 feet (1.8m to 10m). The depth is the distance between the front edge 34 and the back edge 36 of the pad. The height (H) and width (W) are the dimensions of the pad in a cross section perpendicular to the flow of air through the pad. The height and width of the pad may be selected to correspond, e.g., equal, the cross sectional dimensions of the air passage through the air duct.

The media pads are formed of synthetic materials, such as fibers of polyester or glass fibers. The fibers may be coated with polymer materials. Synthetic materials tend to be less rigid than corrugated paper which is used to form conventional media pads. Synthetic media pads have been formed of densely packs synthetic fibers to provide rigidity to the pads. However, dense synthetic material pads when stacked together create an excessive pressure drop in the air flowing through the inlet chamber.

The stack 28 is formed of low density synthetic media pads 38 formed of fibers packed in a low density arrangement and high density synthetic media pads 40 formed of fibers packed in a high density arrangement. The low density pads allow air to flow through and past the pads with minimal pressure drop across the stack. The high density pads provide rigidity to the stack. In the stack, the low density pads may alternate with high density pads in the stack.

The high density pads may be at the opposite sides of the stack, and alternate with low density pads within the pact to ensure that both sides of the low density pads are supported by a high density pad. In another alternative, the high density pads may be separated by two or more low density pads within the stack. The arrangements of low and high density pads in the stack may be determined to achieve goals of minimal air pressure drop through the stack and sufficient structural rigidity such that the pads in the stack do not unduly flutter or otherwise deform as air passes through the stack.

The low density pads may be formed of loosely packed polyester or glass fibers and the high density fibers may be formed of tightly packed polyester or glass fibers. By way of example, the density of fibers across a cross section of the high density pads may be in a range of one-half (50%) to four times (400%) greater than the density of fibers across a cross section of the low density pads.

The width (W) of the low and high density synthetic media pads 38, 40 may be generally uniform, such as within twenty percent. The principal difference between the low density and the high density pads may be the density of polyester fibers in each type of pad. Alternatively, the width of the high density synthetic pads may be narrower than the width of the low density synthetic pads, especially if narrower high density pads impart sufficient structural rigidity to the stack to ensure the stack fills the cross sectional area of the inlet chamber and does not droop or sag.

The density of the pads affects the ability of the pad to adsorb water. The pad's water absorption rate (also referred to as the water soaking capability) is an important parameter for the evaporative cooler. The pads should soak water in quite high degree to keep all pads surfaces area wet for higher cooling efficiency. High density media pads typically have lower water absorption rate than do lower density pads and higher stiffness than low density pads. The low density pads typically have high water absorption rates and tend to be soft and lack rigidity.

Hydrophilic treatments may be applied to the fibers in the pads to increase the water adsorption rate of the pads. Hydrophilic treatments are conventional and typically increase the wicking characteristic of the media, such as fibers, in the pads. Examples of hydrophilic treatments are those that change the three dimensional (3D) orientations of fibers in the pads, and coat the fibers, or other media, in the pads with a coating that attracts water. Increasing the water adsorption rate of the pads tends to increase the cooling efficiency of the evaporative cooler.

The selection and arrangement in a stack of high and low density pads can have advantages of overall good water absorption (such as wherein all surfaces, including fiber surfaces, in the pads are always wet) and a stiff stack structure that holds the stack shape while the stack is in the evaporative cooler. A stiff stack typically has a lower air pressure drop through the pads than a stack with pads that sag, droop or otherwise deform during operation of the evaporative cooler.

The density of the pads, the depth (D) of the media pads and the number of pads in a stack affects the air pressure drop through the pad. The pressure drop increases as the media pad increases in depth. Similarly, an increase in the number of pads and, especially, high density pads, increases the pressure drop through the evaporative cooler. The pressure drop through the evaporative cooler is preferably less than one half of one inch (0.5 inch) of water or 125 pascal, and more preferably 0.3 inch or 75 pascal.

The depth of the media pad and the number of high and low density media pads also affects the efficiency of the evaporative cooler. The efficiency is the ability of the evaporative cooler to increase the water content in the air to one-hundred percent (100%) saturation. An evaporative cooler achieving an efficiency of at least 85% water saturation is desired. The synthetic media pads are selected and arranged in the stack with a goal to minimize the pressure loss through the evaporative cooler and increase the water content of the air to the extent practical.

The sides of the low density pads may have ridges 42 and grooves 44 that form an undulating, e.g., wave-like, surface on the pad. The ridges and grooves increase the rigidity of the pad. The ridges and grooves may also be formed in the sides of the high density pads, or may be formed on one side but not the other of either type of pads. The depth between a groove and a ridge may be a quarter to one half of an inch (60 mm to 130 mm).

To form the grooves and ridges, the sides of the low density pad may be shaped by applying a heated press to the side. The heated press has a heated surface shaped with grooves and ridges. The heated surface forms a mold that shapes the side of the pad into grooves and ridges. The heated press softens and may partially melt the fibers at the side of the pad. The heated fibers deform into the shape of the heated surface of the press and may bond together. The heated fibers cool as the press is cooled or after the press is removed from the side of the pad. The cooled fibers retain the shape of the heated surface of the press.

The grooves and channels distribute water throughout the pad and guide air to flow from the front to the rear of the pad. Water may flow through the gaps 46 between the grooves 44 of the low density pad and the adjacent side of one of the high density pad. The gaps 46 form channels that guide the water and air across the sides of the pads. The gaps may have a width of one quarter to one inch (60 mm to 250 mm), where the width is a distance between adjacent grooves forming the gap.

The grooves and ridges may be inclined to distribute more of the water towards the front edges 34 of the pads and less water towards the rear edges 36. Distributing more water to the front of the pads reduces the risk that water drops enter the airflow downstream of the evaporative cooler. To distribute more water towards the front of the pads, the peaks 48 of the ridges 42 may be towards the downstream edges 36 of the pads. For example, the peaks may be offset from the downstream edges 36 one-third to one-quarter the depth (D) of the pads.

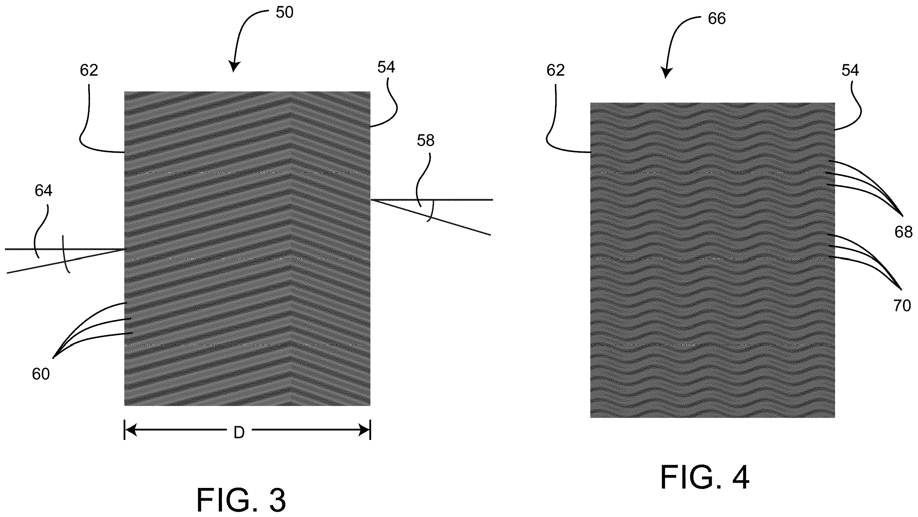

Figure 3 shows a side of a synthetic media pad 50 having ridges that extend in straight lines downward from a peak 52. The peak is a distance of about (plus or minus 20 percent) one quarter the depth (D) of the pad from the rear edge 54. The ridges 56 slope from the peak to the rear edge at an angle 58 of about 18 to 19 degrees. The ridges 60 slope from the peak to the front edge 62 at an angle 64 of 18 to 18 degrees. The synthetic media pad 50 may be formed of polyester or glass fibers are packed in a low or high density.

Figure 4 shows a side of a synthetic medial pad 66. The grooves 68 and ridges 70 on the side of the pad are sinusoidal, e.g., wavy, parallel and extend horizontally from the front edge 62 to the rear edge of the pad. The sinusoidal grooves and ridges provide rigidity to the side of the pad, and they assist in distributing water across the side of the pad. The grooves and ridges may be on opposite sides of a pad, and may be formed on high or low density media pads.

The sinusoidal, horizontally aligned groves and ridges shown in Figure 4 may be adjacent a synthetic media pad having the sloped grooves and ridges shown in Figure 3. For example, a stack may have high density synthetic media pads with opposite sides having the sinusoidal, horizontally aligned grooves and ridges as shown in Figure 4, and low density synthetic media pads with opposite sides having the sloped grooves and ridges shown in Figure 3. In such a stack, the sinusoidal grooves and ridges on the side of one pad may slow and disrupt the flow of water through the strait grooves and ridges on a side of an adjacent pad.

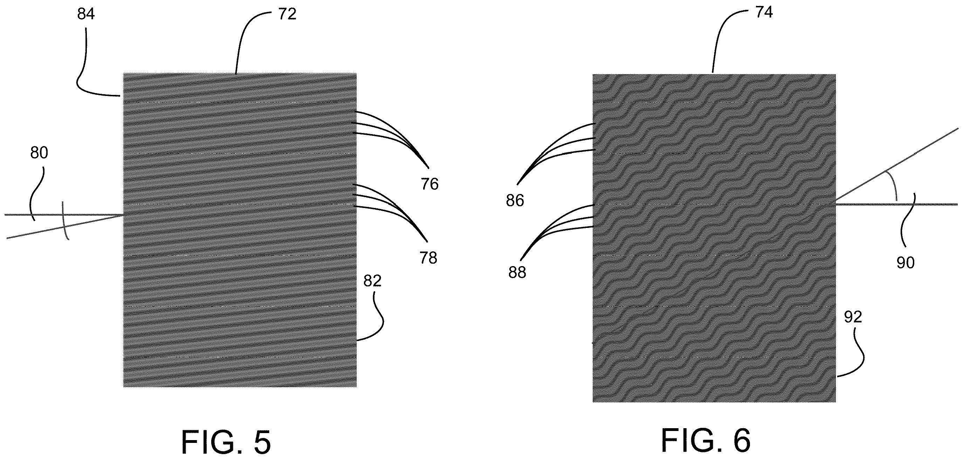

Figure 5 shows a side 70 of synthetic media pad which is configured to be adjacent a side 72 of a synthetic media pad shown in Figure 6. The pad side 70 may be for a high density synthetic media pad, and the pad side 72 may be for low density synthetic media pad. The high density synthetic media pads may alternate with the low density synthetic media pads in a stack.

The pad side 70 has ridges 72 and grooves 74 that are straight and parallel over the entire surface of the side of the pad. The straight ridges and grooves 72, 74 are sloped at an angle 76 of ten (10) degrees. The angle may be sloped downward from the rear edge 78 of the pad to the front edge 80 of the pad. The slope may be downward, as shown in Figure 5, to cause water to flow towards the front edge 84 and away from the rear edge of the pad. Alternatively, the slope may downward from the front edge 84 to the rear edge of the pad. A range of slope angles 80 may be selected, such as a range of zero to fifteen degrees where the slope is either downward towards the front edge 84 or the rear edge 82.

The side pad 74 shown in Figure 6 may be for a synthetic media pad adjacent a synthetic media pad having the side pads 72 shown in Figure 5. The side pad 74 has sinusoidal, e.g., wavy, ridges 86 and grooves 88 that are parallel to each other over the entire surface of the side pad. The ridges 86 and grooves 88 are oriented at a slope 90 extending downward from the rear edge 92 of the pad towards the front edge 94 of the pad. The slope may be twenty (20) degrees, or in a range of zero to thirty (30) degrees. The slope may also be downward from the front edge towards the rear edge of the pad.

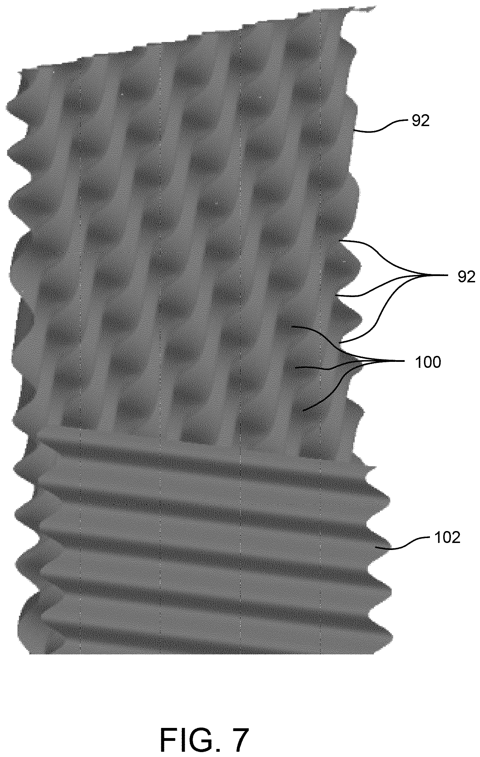

Figure 7 shows adjacent sides of two synthetic media pads. Only portions of the sides are shown in Figure 7 and one side is partially removed from the other so that the surface pattern of both sides appears in the figure.

The side 96 of one of the pads has a checkerboard pattern of ridges 98 and grooves 100, e.g., depressions, between the ridges. The side 102 of the adjacent pad has grooves and ridges arranged in straight lines, such as shown in Figures 3 and 5. The checkerboard pattern of ridges and depressions is another example of a structure strengthening surface patter that enhances the rigidity and strength of a synthetic media pad. The checkerboard pattern may also be used to affect the flow of water through the gaps between the adjacent sides 96 and 102. For example, the depressions in the checkerboard pattern may allow water to collect in temporary pools in each depression so that the water flows more slowly down through the pad.

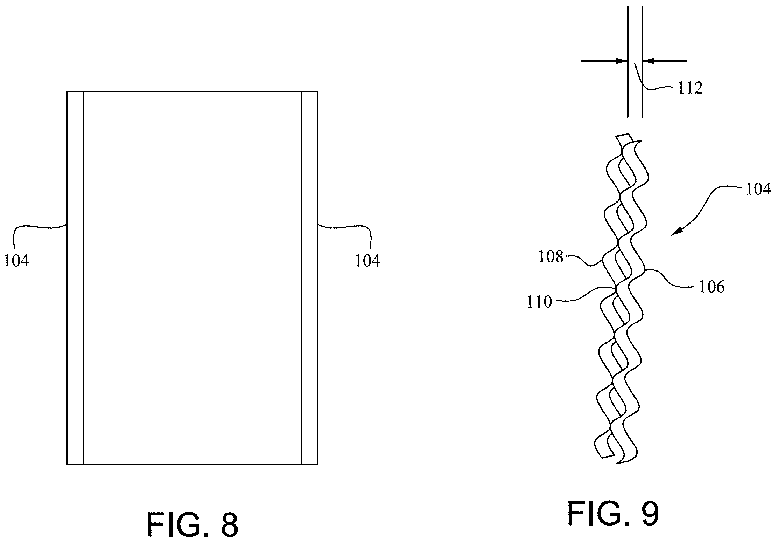

Figures 8 and 9 show the joining of synthetic media pads at the edges of pads. A side of a pad shown in Figure 8 has narrow strips 104 at the front edge and the rear edge. Along these narrow strips 104, the ridges on the side 106 of one pad are jointed 110 to the ridges 108 on the side of the adjacent pad. The joints may be every one or two inches (200 to 500 mm) along the strip 104. The joining may be by glue, heat or other fastening mechanism. By joining the front and rear edges of adjacent pads, the pads are prevented from separating from each other. The gap 110 from one groove to an opposite grooves and between adjacent pads may be in a range of 0.25 to 0.75 inch and may be 0.5 inch (6 to 19 mm and may be 12 mm).

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

Various aspects and embodiments of the present invention are defined by the following numbered clauses:
1. An evaporative cooler configured for a device, the cooler comprising a stack of synthetic media pads, wherein the stack is configured to be mounted in an inlet chamber having an inlet open to atmospheric air and an outlet coupled to an air inlet to the device, wherein the synthetic media pads include high density synthetic media pads and low density synthetic media pads.
2. The evaporative cooler of clause 1, wherein the synthetic media pads are formed of polyester or glass fibers, and the high density synthetic media pads have a density of fibers greater than a density of fibers in the low density synthetic media pads.
3. The evaporative cooler of any preceding clause, wherein the density of the high density synthetic media pads is at least twice the density of the low density synthetic media pads.
4. The evaporative cooler of any preceding clause, wherein the high density synthetic media pads alternate in the stack with the low density synthetic media pads.
5. The evaporative cooler of any preceding clause, wherein the synthetic media pads each are formed of polyester or glass fibers.
6. The evaporative cooler of any preceding clause, wherein the low density synthetic media pads include sides, and a surface pattern on the sides includes parallel ridges and grooves.
7. The evaporative cooler of any preceding clause, wherein the parallel ridges each peak in a rear half of the stack and slope downward from the peak towards a front face of the stack.
8. The evaporative cooler of any preceding clause, wherein the parallel ridges are wavy between a front face and a rear face of the stack.
9. The evaporative cooler of any preceding clause, the high density synthetic media pads includes sides, and a surface pattern on the sides includes parallel ridges and grooves.
10. The evaporative cooler of any preceding clause, wherein the synthetic media pads are arranged in the stack such that front edges of the media pads are aligned with a front face of the stack and rear edges of the media pads are aligned with a rear face of the stack.
11. The evaporative cooler of any preceding clause, wherein a front surface of the stack covers an entirety of an air flow passage in the inlet chamber.
12. Synthetic media pads configured to be arranged in a stack for an evaporative cooler mounted in an air inlet chamber for a gas turbine, wherein the synthetic media pads include high density synthetic media pads and low density synthetic media pads.
13. The synthetic media pads of any preceding clause, wherein the synthetic media pads are formed of polyester or glass fibers, and the high density synthetic media pads have a density of fibers at least fifty percent denser than a density of fibers in the low density synthetic media pads.
14. The synthetic media pads of any preceding clause, wherein the synthetic media pads each are formed of polyester or glass fibers.
15. The synthetic media pads of any preceding clause, wherein the low density synthetic media pads include sides, and a surface pattern on the sides includes parallel ridges and grooves.
16. The synthetic media pads of any preceding clause, wherein the parallel ridges each peak in a rear half of the stack and slope downward from the peak towards a front face of the stack.
17. The synthetic media pads of any preceding clause, wherein the parallel ridges are wavy between a front face and a rear face of the stack.
18. A method to form a stack of synthetic media pads for an evaporative cooler, the method comprising:
   arranging in the stack high density synthetic media pads of synthetic fibers, wherein a density of fibers in the high density media pads is above a first threshold density;
   arranging in the stack low density synthetic media pads of synthetic fibers, wherein a density of fibers in the low density media pads is below a second threshold density which is lower than the first threshold density, and
   positioning the stack in the evaporative cooler such that a front surface of the stack faces air drawn into an inlet chamber and a rear surface faces an air passage leading to an inlet to a gas turbine.
19. The method of any preceding clause, further comprising applying heat to sides of the low density synthetic media pads to deform the fibers at the sides to form a surface pattern on the sides including parallel ridges and grooves.
20. The method of any preceding clause, further comprising applying heat to sides of the high density synthetic media pads to deform the fibers at the sides to form a surface pattern on the sides including parallel ridges and grooves.

## Claims

1. An evaporative cooler (20) configured for a device (12), the cooler comprising (28) a stack of synthetic media pads (38, 40, 50, 66, 96), wherein the stack is configured to be mounted in an inlet chamber (14) having an inlet open to atmospheric air and an outlet coupled to an air inlet to the device, wherein the synthetic media pads include high density synthetic media pads (40) and low density synthetic media pads (38).

2. The evaporative cooler of claim 1, wherein the synthetic media pads (38, 40, 50, 66, 96) are formed of polyester or glass fibers, and the high density synthetic media pads have a density of fibers greater than a density of fibers in the low density synthetic media pads.

3. The evaporative cooler of claim 2, wherein the density of the high density synthetic media pads (40) is at least twice the density of the low density synthetic media pads (38).

4. The evaporative cooler of claim 1, 2 or 3, wherein the high density synthetic media pads (40) alternate in the stack with the low density synthetic media pads (38).

5. The evaporative cooler of claim 1, wherein the synthetic media pads (38, 40, 50, 66, 96) each are formed of polyester or glass fibers.

6. The evaporative cooler of any preceding claim, wherein the low density synthetic media pads (38) include sides, and a surface pattern on the sides includes parallel ridges and grooves (42, 44, 56, 60, 68, 76, 78, 88, 90, 98).

7. The evaporative cooler of claim 6, wherein the parallel ridges (42) each peak (48) in a rear half of the stack and slope downward from the peak (48) towards a front face (34) of the stack.

8. The evaporative cooler of claim 6, wherein the parallel ridges (42) are wavy between a front face (34, 62) and a rear face (36, 54) of the stack.

9. The evaporative cooler of any preceding claim, wherein a front face (34) of the stack covers an entirety of an air flow passage in the inlet chamber (14).

10. A method to form a stack (28) of synthetic media pads (38, 40, 50, 66, 96) for an evaporative cooler (20), the method comprising:
arranging in the stack high density synthetic media pads of synthetic fibers, wherein a density of fibers in the high density media pads (40) is above a first threshold density;
arranging in the stack low density synthetic media pads (38) of synthetic fibers, wherein a density of fibers in the low density media pads is below a second threshold density which is lower than the first threshold density, and
positioning the stack in the evaporative cooler such that a front surface (34, 62) of the stack faces air drawn into an inlet chamber and a rear surface (36, 54) faces an air passage leading to an inlet to a gas turbine.

11. The method of claim 10, further comprising applying heat to sides of the low density synthetic media pads to deform the fibers at the sides to form a surface pattern on the sides including parallel ridges and grooves (42, 44, 68, 70).

12. The method of claim 10, further comprising applying heat to sides of the high density synthetic media pads to deform the fibers at the sides to form a surface pattern on the sides including parallel ridges and grooves (42, 44, 56, 60, 68, 76, 78, 88, 90, 98).

13. The method of any of claims 10 to 12, wherein step of arranging includes arranging the high density synthetic media pads (40) to alternate in the stack with the low density synthetic media pads (38).

14. The method of claim 10, wherein the low density synthetic media pads (38) include sides, and a surface pattern on the sides includes parallel ridges and grooves (42, 44, 56, 60, 68, 76, 78, 88, 90, 98).

15. The method of claim 14, wherein the parallel ridges (42) each peak (48) in a rear half of the stack and slope downward from the peak (48) towards a front face (34) of the stack.
